# EUROPEAN PATENT SPECIFICATION

(11) **EP 2 438 293 B1**
(45) Date of publication and mention of the grant of the patent: **29.05.2013**
(21) Application number: 10730844.7
(22) Date of filing: 01.06.2010
(51) Int. Cl.: F03B 13/20, F03G 7/08, G01C 19/02

(54) **WAVE ENERGY CONVERTER**
WELLENENERGIEWANDLER
CONVERTISSEUR D'ÉNERGIE HOULOMOTRICE

(30) Priority: 04.06.2009 IT TO20090422
(43) Date of publication of application: 11.04.2012
(73) Proprietor: Politecnico di Torino, 10129 Torino (IT)
(72) Inventor: BRACCO, Giovanni, I-10129 Torino (IT); GIORCELLI, Ermanno, I-10129 Torino (IT); MATTIAZZO, Giuliana, I-10129 Torino (IT); PASTORELLI, Michele, I-10129 Torino (IT)
(74) Representative: Frontoni, Stefano
(86) International application number: PCT/IB2010/052433
(87) International publication number: WO 2010/140113

(56) References cited:
- EP-A1- 1 384 824
- WO-A2-2008/097116
- GB-A- 2 409 898

## Description

The present invention regards a system for generating electric energy from wave motion of sea comprising:
- a floating body and a gyroscopic structure placed thereon and comprising:
- a first frame mounted so as to oscillate with respect to the floating body according to a first oscillating motion around a first axis;
- a second frame mounted so as to oscillate according to a second oscillating motion around a second axis which is borne by said first frame and is substantially orthogonal to said first axis;
- a rotor which is mounted so as to rotate around a third axis borne by said second frame and substantially orthogonal to said second axis; said system comprising, furthermore, electric generating means operatively connected to said gyroscopic structure.

A generator system of the aforedescribed type is for example described in the United States patent n° US4352023. The system described in such document provides for electric generating means which are connected to the rotational axis of the second frame of the gyroscopic structure with the interposition of transmission means having the purpose of providing the rotor of the electric generating means with an angular velocity between ten and a hundred times greater with respect to the angular velocity at which the second frame oscillates. The use of the abovementioned transmission means considerably complicates the structure of the system and also deteriorates the operation efficiency thereof. As a matter of fact, the kinetic energy of the sea wave motion which is absorbed by the gyroscopic structure is partly lost in the kinematic chain of the transmission means, hence the electric generating means receive - in input - a lower h amount of mechanical energy with respect to the amount that the gyroscopic structure is capable of processing on the rotational axes thereof. Furthermore, the abovementioned transmission means, being rotated by the first frame of the gyroscopic structure, exert a braking action on the precessional motion of the rotor of such structure, to a point of additionally slowing the dynamic of the system which is already slow on its own. Document W02008/097116A2 describes a Wave Energy Converter of known type, comprising a gyroscopic structure associated to a rotary electrical generator.

The present invention proposes to improve the aforedescribed solutions by providing a gyroscopic structure having all the characteristics of claim 1, and a system for generating electric energy from wave motion of sea comprising such a gyroscopic structure. In particular, the generator system described herein provides for electric generating means comprising at least one first magnet and one first winding operatively associated to said first magnet, one between said first magnet and first winding being borne by said second frame to rotate around said second axis, while the other between said first magnet and first winding being borne by said first frame, so that said first magnet and first winding are movable with respect to each other around said rotor in a first plane intersecting the rotor, said electric generating means further comprising at least one second magnet and one second winding operatively associated to said second magnet, one between said second magnet and second winding being borne by said first frame to rotate around said first axis, while the other between said second magnet and second winding being fixed to said floating body, so that said second magnet and second winding are movable with respect to each other around said rotor in a second plane intersecting the rotor.

In the present description and in the claims that follow, the term magnet is used to indicate any device capable of generating a magnetic field, regardless of whether it is a permanent magnet, an electromagnet or any other means suitable for the purpose, while the term winding is used to indicate any envelope of a conductor wire, in which electric voltages, induced each time it is subjected to a variable magnetic flow, are created.

In the generator system described herein the magnets and the windings of the electric generating means are borne in relative mutual movement directly by the rotatable frames of the gyroscopic structure. Such relative movement occurs along circular trajectories around the rotor of the gyroscope, on planes intersecting the latter. As observable hereinafter, such configuration allows obtaining highly efficient electric generating means which are suitably integrated in the same gyroscopic structure, or constitute an integral part of the gyroscopic structure.

According to a preferred embodiment of the invention said first frame has an intersecting ring configuration, with axes orthogonal to each other and intersecting at a point defining a common centre of such rings, defining a first and second circumferential trajectory, respectively within said first and second plane, along which a series of one of said first magnet and first winding and a series of one of said second magnet and second winding can respectively be arranged.

Due to the previously indicated characteristics, the electric generator system described herein is capable of exploiting the rotations of the gyroscopic structure, around both the abovementioned first and second axis, with greater efficient conversion of mechanical energy into electric energy with respect to that of the gyroscopic structure electric generator systems of the known type.

Furthermore, the system described herein has a simple and resistant structure, which does not require particular maintenance interventions and which is thus particularly suitable for off-shore applications.

Preferred characteristics of the invention are included in the description that follows and in the attached claims, which are to be considered as an integral part of the description.

Further characteristics and advantages of the invention shall be apparent from the attached drawings provided purely by way of non limiting example, wherein:
- figure 1 represents a schematic perspective view of the generator system according to the invention;
- figure 2 represents an application of the generator system according to the present invention;
- figure 3 represents a perspective view of the gyroscopic structure of the generator system of figure 1;
- figure 4 represents a perspective view of the structure of figure 3 wherein, for the sake of representation clarity, some parts were removed;
- figure 5 represents a perspective view of components of the structure of figure 3;
- figure 6 represents a perspective view of components of the structure of figure 3;
- figure 7 represents a perspective view of components of the structure of figure 3;
- figure 8 represents a perspective view of components of the structure of figure 3.
Referring to the figures, a system for generating electric energy from wave motion of sea is indicated with 1. Such system comprises a floating structure 2 formed by a central body 3 from which four coplanar beams 4, orthogonal two by two and at whose ends a respective floating element 5 is fixed, depart. The floating structure 2 illustrated in the figures is used solely by way of example, given that the electric generator system described herein may have floating structures of other shapes without departing from the principles of the present invention.

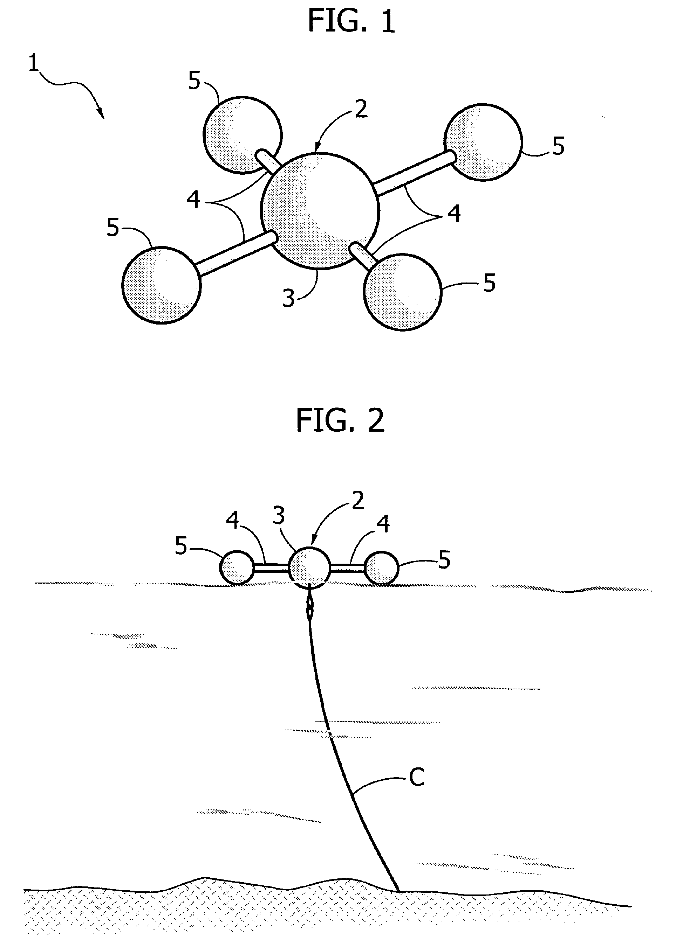

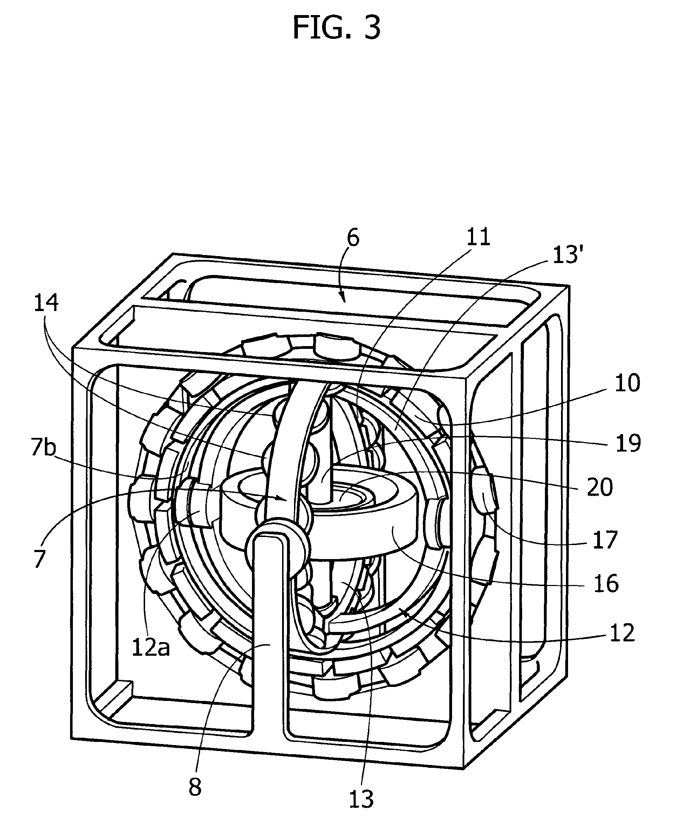

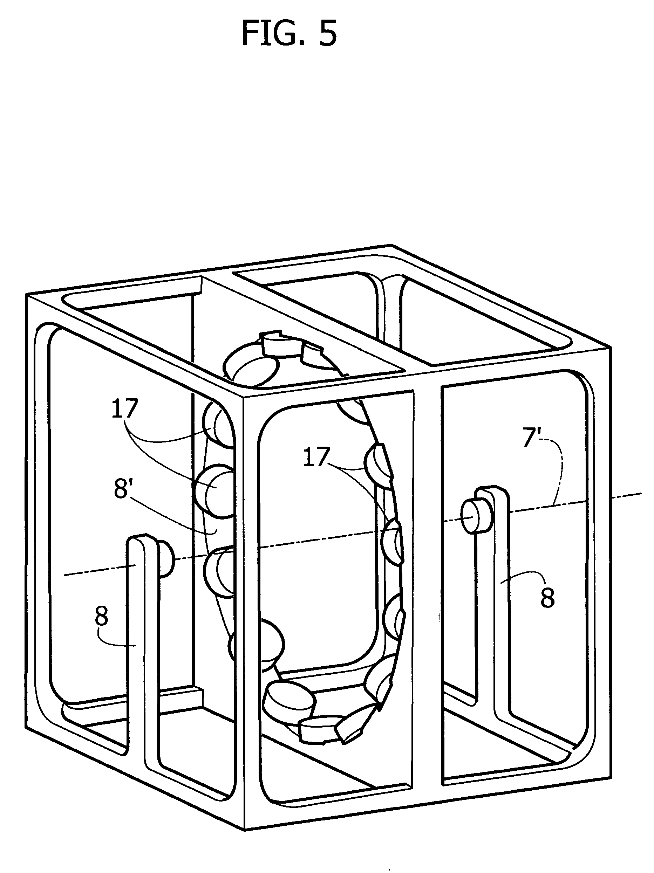

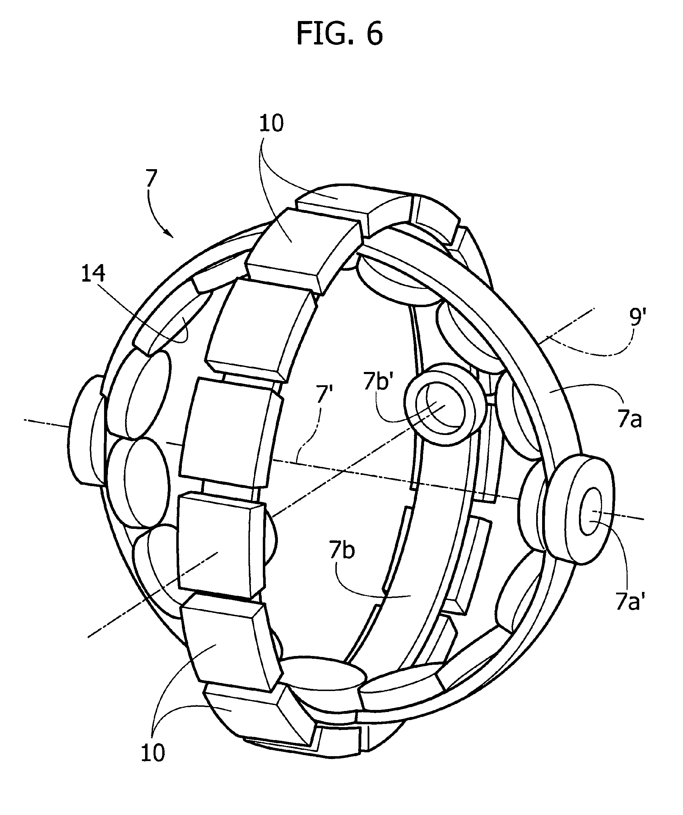

Figure 2 represents the methods for installing the electric generator system 1 in an application thereof. As observable in such figures, such system is constrained to the sea bed by means of a chain C, or the like, loosely connected to the central body 3 so that the latter does not interfere with the oscillations of the floating body 2 imparted from wave motion of sea. The central body 3 has a substantially shell-like structure within which a gyroscopic structure 6, visible in detail in figure 3, fixed on an internal scaffold for supporting the shell 3, is arranged. As observable in figure 5, such scaffold comprises an internal cylindrical surface 8' with axis 7' parallel to the floating plane of the floating body 2. In the preferred embodiment of the figures, a circular series windings made of conductor wire 17, such as for example copper wire, is arranged perimetrically on the cylindrical surface 8'. A first frame 7 is mounted on support beams 8 of the abovementioned scaffold, rotatable around a first rotational axis 7'. The first frame 7 is illustrated in detail in figure 6. It has an intersecting rings structure with axes orthogonal to each other and intersecting at a point defining a common centre of such rings. In particular it comprises a first ring portion 7a, which, at two external diametrically opposite regions, is provided with suitable seats 7a' intended to engage, rotatably around the abovementioned first rotational axis 7', corresponding pins borne by the abovementioned uprights 8. A second ring portion 7b is fixed to the portion 7a with the axis thereof substantially aligned with the geometric axis which joins the two seats 7a'. The first and second ring portion 7a and 7b are ideally substantially contained in the same spherical surface. The portion 7b has, at diametrically opposite circumferential portions, respectively two internal seats 7b' defining a second rotational axis 9'. In the preferred embodiment of the figures, a perimetral series of permanent magnets 10 is arranged on the external surface of the portion 7b. A perimetral series of windings made of conductor wire 14 are instead arranged on the internal surface of the portion 7a.

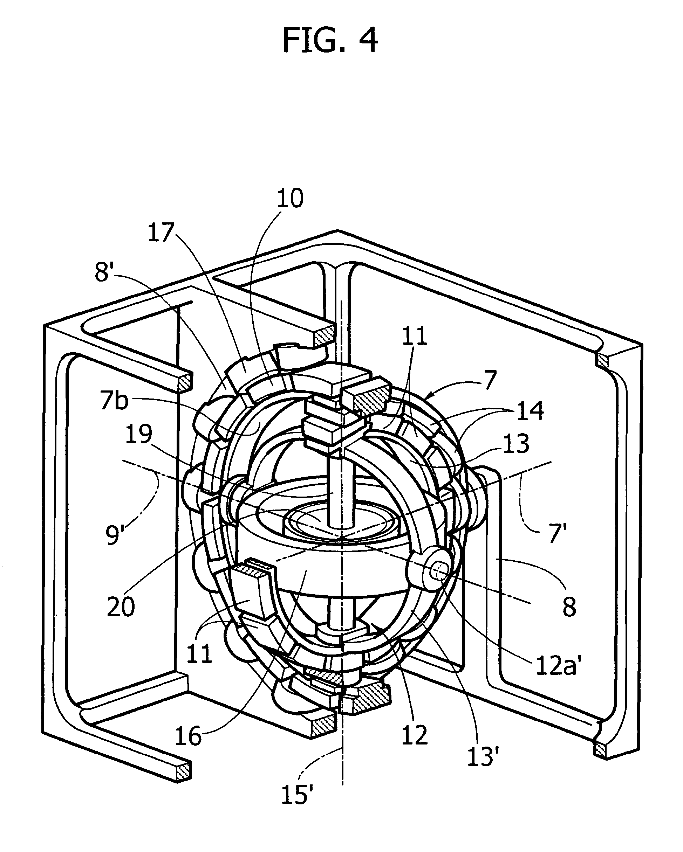

As observable in figures 3 and 4, the first frame 7 is mounted so as to rotate on the supports 8 so that the series of magnets 10 faces the series of windings made of a conductor wire 17 arranged on the cylindrical surface 8' of the abovementioned scaffold.

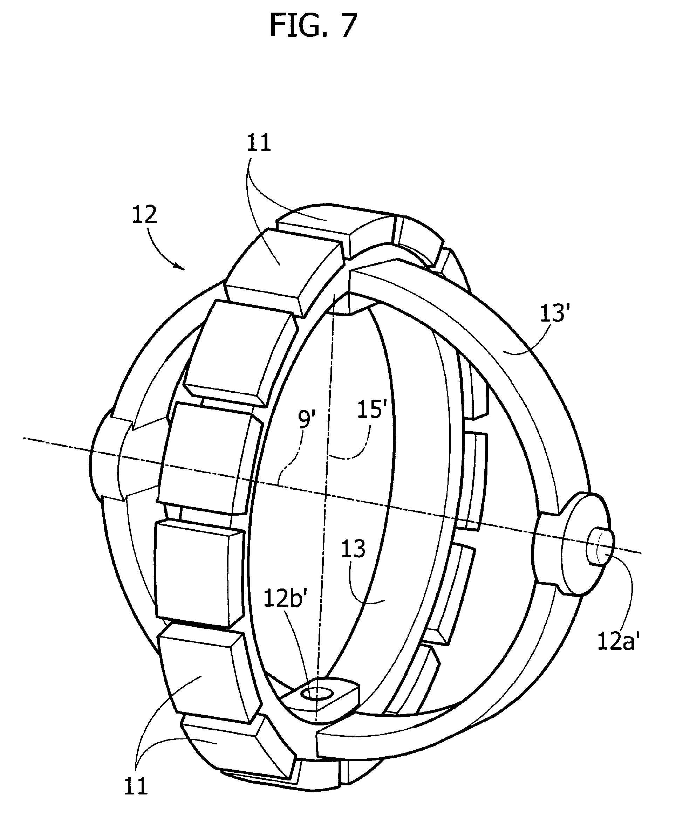

A second frame 12 is mounted, rotatable around the second axis 9', on the ring portion 7b. As observable in figure 7, the second frame 12 has, analogously to the first frame 7, an intersecting rings structure with axes orthogonal to each other and intersecting at a point defining a common centre of such rings. In particular, it comprises a third ring portion 13', which - at the two diametrically opposite external regions - is provided with respective pins 12a', directed outside the structure and suitable to rotatably engage - around the axis 9' - the seats 7b' of the ring portion 7b. A fourth ring portion 13 is fixed to the portion 13' with the axis thereof substantially aligned with the geometric axis which joins the two pins 12a'. The third and fourth ring portion 13', 13 are ideally substantially contained in the same spherical surface.

The second frame 12 has two internal seats 12b' arranged, diametrically opposite, in such a manner to define a third rotational axis 15' substantially coincident with the direction which is identified by the intersection of the planes defined by the two ring portions 13', 13. The third axis 15' is orthogonal to the second axis 9'. In the preferred embodiments illustrated in the figures, a perimetral series of permanent magnets 11 is arranged on the external surface of the fourth ring portion 13. A rotor 16 is mounted on the frame 12, rotatable around the third rotational axis 15', by engaging the shaft 19 thereof with the seats 12b' of the frame 12.

As observable in the preferred embodiment in figures 3 and 4, the second frame 12 is mounted, rotatable around the second axis 9', on the ring portion 7b so that the series of magnets 11, borne by the fourth ring portion 13, faces the corresponding series of windings made of conductor wire 14, borne by the ring portion 7a of the first frame 7. As observable in figures 3 and 4, the ring portions of the first frame and the second frame surround the rotor 16 in a planetary rings-like manner.

The series of magnets and windings made of conductor wire facing each other are operatively associated with respect to each other so as to operate as electric generators. In particular, the series of magnets 10 is operatively associated to the series of windings made of conductor wire 17 due to the translation of the same magnets 10, with respect to the windings 17, which is caused by the rotation of the first frame 7 around the axis 7', and thus of the ring portion 7b on which the magnets 10 are arranged, around the first rotational axis 7'. Such relative translation between the magnets 10 and the windings 17 causes induced voltages on the latter. Likewise, the series of magnets 11 is operatively associated to the series of windings made of conductor wire 14 due to the mutual relative translation thereof which is caused by the rotation of the second frame 12, and thus of the fourth ring portion 13 on which the magnets 11 are arranged, around the second axis 9'.

As described beforehand, it is apparent that the mutual arrangement, described previously, of the magnets and the windings made of conductor wire allows directly exploiting, with the aim of generating electric energy, the rotation of the first frame 7 and the second frame 12, respectively around the first axis 7' and the second axis 9'. Substantially, in the system described herein, the electric generating means directly use the kinematic chain of the gyroscopic structure.

The series of windings, indicated previously, may be obtained both by enveloping a single conductor wire along, respectively, the cylindrical surface 8' and the ring portion 7a of the first frame, according to a configuration which identifies a plurality of solenoids arranged in series and arranging - in series - a plurality of wires wound to form a solenoid, along such cylindrical surface and ring portion.

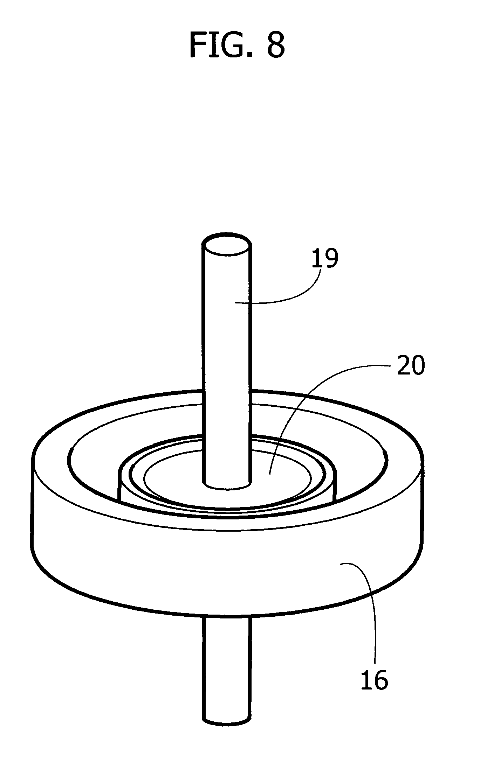

The gyroscopic structure is actuated due to the oscillation of the floating body 2 according to a roll motion, pitch motion or a combination thereof. For example, if - due to an oscillation of the floating body 2 - the first frame 7 is relatively rotated with respect to the second frame 13 around the second axis 9', a torque operating on the first frame 7 which causes a rotation of the latter around the first rotational axis 7' is generated due to the inertial forces in question. The first frame 7, during the latter rotation, draws the second frame 13 therealong generating, still due to the inertial forces in question, an additional torque, which causes a rotation of the second frame 13 around the second axis 9' and a rotation of the rotor 16 around the rotational axis 15', thus obtaining the precesional motion of the rotor 16. The rotation of the first and second frame, as previously mentioned, cause, through the interaction between the magnets 10, 11 and the windings made of conductor wire 14, 17, a generation of electric voltage in the same windings. The generator system described herein may be provided with an accumulation storage system (not shown) for the accumulation of the generated electric energy. Furthermore, as observable in figures 3, 4 and 8, the system 1 is also provided with an electric motor 20, interposed between the rotor 16 and the shaft 19, which has the function of keeping the rotor 16 in rotation and thus keep the dynamic of the gyroscopic structure active. A control unit (not shown) of the system 1 provides for controlling the operative conditions of the electric generating means.

In the previously described electric generator system, the conversion of mechanical energy into electric energy is obtained with higher performance with respect to that of the systems of the prior art. As a matter of fact, as already mentioned previously, contrary to the gyroscopic structure electric generator systems of the known type, in the system described herein, the kinetic energy generated in the gyroscopic structure is directly used for the displacement of the moveable parts of the electric generators without interposing any kinematic chain between the gyroscopic structure and the electric generators. In this manner, the kinetic energy drops due to frictions and inertia is reduced to the minimum, being solely limited to those inherent to the operation of the gyroscopic structure and the electric generating means.

Regarding this, it is substantially due to the particular configuration of the electric generating means - described previously and claimed in the claims that follow that the intermittent rotations of the two frames of the gyroscopic structure may be advantageously exploited directly, as indicated previously, and with high performance. In particular, the "planetary rings" configuration of the electric generating means allows the latter to operate efficiently even at low angular velocities at which the frames of the gyroscopic structure usually oscillate. As a matter of fact, inside the electric generator system described herein, such electric generators may advantageously acquire a radial development which is considerably greater with respect to that of conventional electric generators, with the aim of having, considering the same longitudinal extension with the latter, a greater magnetic gap volume. Hence, the electric generating means of the system described herein are generally capable of generating higher electric powers with respect to those, in the same conditions, generated by the conventional electric generators in a gyroscopic structure electric generator system of the known type.

Regarding this, it should be observed that in the applications of the wave electric generator systems with a gyroscopic structure, the latter - during operation - processes significant low speed torques, hence the configuration of the electric generating means described up to now is, due to the reasons indicated above, the ideal one for producing electric energy exploiting the kinematics of the gyroscopic structure.

Lastly, it should also be observed that the absence, in the system described herein, of mechanical transmission means makes the structure of the system extremely simple, resistant, and thus particularly suitable to operate under harsh conditions, over long periods of time, without requiring maintenance operations.

Though the present invention has been described in detail, it shall be understood that various modifications, replacements and changes may be performed herein without departing from the principles and the scope of protection of the invention as defined in the attached claims.

## Claims

1. Gyroscopic structure (6) for generating electric energy, comprising:
- a first frame (7) which is adapted to be mounted so as to oscillate according to a first oscillating motion around a first axis (7');
- a second frame (12) mounted so as to oscillate according to a second oscillating motion around a second axis (9') which is brought by said first frame and is substantially orthogonal to said first axis,
- a rotor (16) which is mounted so as to rotate around a third rotational axis (15') brought by said second frame and substantially orthogonal to said second axis;
said structure having electric generating means, comprising at least one first magnet (14) and one first winding (11) operatively associated to said first magnet, and at least one second magnet (10) and one second winding (17) operatively associated to said second magnet,
so that
one between said first magnet and first winding is brought by said second frame to rotate around said second axis, while the other between said first magnet and first winding is brought by said first frame, so that said first magnet and first winding are moveable with respect to each other around said rotor in a first plane intersecting the rotor, and
one between said second magnet and second winding is brought by said first frame to rotate around said first axis, while the other between said second magnet and second winding is fixed with respect to said first and second frame, so that said second magnet and second winding are moveable with respect to each other around said rotor in a second plane intersecting the rotor.

2. Structure according to claim 1, wherein said first plane contains said first axis (7'), and said second plane contains said second axis (9').

3. Structure according to claim 2, wherein a plurality of said first magnet (14) and first winding (11) are arranged, operatively associated to each other, substantially along respective first circular trajectories contained in said first plane and whose axis coincides with said second axis, and a plurality of said second magnet (10) and second winding (17) are arranged, operatively associated to each other, along respective second circular trajectories contained in said second plane and whose axis coincides with said first axis.

4. Structure according to claim 1, wherein said first frame comprises a first ring (7a) which is adapted to bring a circular series of one between said first magnet and first winding, which is arranged with its own axis aligned to said second axis (9'), so that said series cooperates with a corresponding series of the other between said first magnet and first winding, which said second frame (12) is adapted to bring , wherein said first frame has furthermore a second ring (7b) which is fixed to said first ring (7a) with its own axis aligned to said first axis (7'), said second ring bringing said second axis (9') and being adapted to receive a series of one between said second magnet and one second winding, which is adapted to cooperate with a corresponding circular series of the other between said second magnet and second winding, which is fixed with respect to said first and second frame.

5. Structure according to claim 4, wherein said second frame has an intersecting ring configuration, with axes orthogonal to each other and intersecting at a point defining a common centre of such rings, said second frame (12) bringing said third axis (15'), according to an arrangement wherein said third axis substantially coincide with the direction identified by the intersection of the planes defined by the intersecting rings, one between said intersecting rings being adapted to bring said corresponding series of the other between said first magnet and first winding, while the other between said rings engaging said second ring (7b) so as to be able to rotate with respect thereto, around said second axis (9').

6. Structure according to claim 1, wherein said first frame has an intersecting ring configuration (7a, 7b), with axes orthogonal to each other and intersecting at a point defining a common centre of such rings, defining a first and second circumferential trajectory, respectively within said first and second plane, along which a series of one of said first magnet and first winding and a series of one of said second magnet and second winding can respectively be arranged.

7. System for generating electric energy from wave motion of sea comprising a floating body and a gyroscopic structure (6) according to any one of claims 1 to 6 placed on said floating body.

## Patentansprüche

1. Gyroskopischer Aufbau (6) zum Erzeugen von elektrischer Energie, der umfasst:
- einen ersten Rahmen (7), der derart montiert ist, dass er in einer ersten Oszillationsbewegung um eine erste Achse (7') oszilliert,
- einen zweiten Rahmen (12), der derart montiert ist, dass er in einer zweiten Oszillationsbewegung um eine zweite Achse (9'), die durch den ersten Rahmen gehalten wird und im Wesentlichen orthogonal zu der ersten Achse ist, oszilliert,
- einen Rotor (16), der derart montiert ist, dass er sich um eine dritte Drehachse (15') dreht, die durch den zweiten Rahmen gehalten wird und im Wesentlichen orthogonal zu der zweiten Achse ist,
wobei der Aufbau eine Einrichtung zum Erzeugen von elektrischer Energie aufweist, die wenigstens einen ersten Magneten (14) und eine operativ mit dem ersten Magneten assoziierte erste Wicklung (11) sowie wenigstens einen zweiten Magneten (10) und eine operativ mit dem zweiten Magneten assoziierte zweite Wicklung (17) umfasst,
**dadurch gekennzeichnet, dass**
der erste Magnet oder die erste Wicklung durch den zweiten Rahmen gehalten wird, um sich um die zweite Achse zu drehen, während entsprechend die erste Wicklung oder der erste Magnet durch den ersten Rahmen gehalten wird, sodass der erste Magnet und die erste Wicklung in Bezug aufeinander um den Rotor in einer den Rotor schneidenden ersten Ebene bewegt werden können, und
der zweite Magnet oder die zweite Wicklung durch den ersten Rahmen gehalten wird, um sich um die erste Achse zu drehen, während entsprechend die zweite Wicklung oder der zweite Magnet in Bezug auf den ersten und den zweiten Rahmen fixiert ist, sodass der zweite Magnet und die zweite Wicklung in Bezug aufeinander um den Rotor in einer den Rotor schneidenden zweiten Ebene bewegt werden können.

2. Aufbau nach Anspruch 1, wobei die erste Ebene die erste Achse (7') enthält und die zweite Ebene die zweite Achse (9') enthält.

3. Aufbau nach Anspruch 2, wobei eine Vielzahl von ersten Magneten (14) und ersten Wicklungen (11) operativ miteinander assoziiert im Wesentlichen entlang entsprechenden ersten Kreisbahnen angeordnet sind, die in der ersten Ebene enthalten sind und deren Achsen mit der zweiten Achse zusammenfallen, und wobei eine Vielzahl von zweiten Magneten (10) und zweiten Wicklungen (17) operativ miteinander assoziiert entlang entsprechenden zweiten Kreisbahnen angeordnet sind, die in der zweiten Ebene enthalten sind und deren Achsen mit der ersten Achse zusammenfallen.

4. Aufbau nach Anspruch 1, wobei der erste Rahmen einen ersten Ring (7a) umfasst, der ausgebildet ist, um eine kreisrunde Folge der ersten Magneten oder ersten Wicklungen zu halten, und derart angeordnet ist, dass seine eigene Achse mit der zweiten Achse (9') ausgerichtet ist, sodass die Folge mit einer an dem Rahmen (12) gehaltenen entsprechenden Folge der ersten Wicklungen oder ersten Magneten zusammenwirkt, wobei der erste Rahmen weiterhin einen zweiten Ring (7b) umfasst, der an dem ersten Ring (7a) fixiert ist und dessen eigene Achse mit der ersten Achse (7') ausgerichtet ist, wobei der zweite Ring die zweite Achse (9') hält und ausgebildet ist, um eine Folge der zweiten Magneten oder zweiten Wicklungen aufzunehmen, die mit einer entsprechenden kreisrunden Folge der zweiten Wicklungen oder zweiten Magneten zusammenwirkt, die in Bezug auf den ersten und den zweiten Rahmen fixiert ist.

5. Aufbau nach Anspruch 4, wobei der zweite Rahmen eine kreuzende Ringkonfiguration aufweist, deren Achsen orthogonal zueinander sind und einander an einem Punkt kreuzen, der ein gemeinsames Zentrum der Ringe definiert, wobei der zweite Rahmen (12) die dritte Achse (15') hält, wobei eine Anordnung vorgesehen ist, in welcher die dritte Achse im Wesentlichen mit der Richtung zusammenfällt, die durch die Kreuzung der Ebenen, die durch die kreuzenden Ringe definiert werden, identifiziert wird, wobei einer der kreuzenden Ringe ausgebildet ist, um die entsprechende Folge der ersten Wicklungen oder ersten Magneten zu halten, während der andere Ring in den zweiten Ring (7b) eingreift, um sich in Bezug auf denselben um die zweite Achse (9') drehen zu können.

6. Aufbau nach Anspruch 1, wobei der erste Rahmen eine kreuzende Ringkonfiguration (7a, 7b) aufweist, deren Achsen orthogonal zueinander sind und sich an einem Punkt kreuzen, der ein gemeinsames Zentrum der Ringe definiert, wobei die Ringe eine erste und eine zweite Kreisbahn jeweils in der ersten und in der zweiten Ebene definieren, entlang welcher jeweils eine Folge der ersten Magneten oder ersten Wicklungen und eine Folge der zweiten Magneten oder zweiten Wicklungen angeordnet sein können.

7. System zum Erzeugen von elektrischer Energie aus der Wellenbewegung des Meeres, wobei das System einen Schwimmkörper und einen auf dem Schwimmkörper angeordneten gyroskopischen Aufbau (6) nach einem der Ansprüche 1 bis 6 umfasst.

## Revendications

1. Structure gyroscopique (6) pour générer de l'énergie électrique, comprenant :
- un premier cadre (7) qui est conçu pour être monté de sorte à osciller selon un premier mouvement d'oscillation autour d'un premier axe (7') ;
- un second cadre (12) monté de sorte à osciller selon un second mouvement d'oscillation autour d'un deuxième axe (9') qui est entraîné par ledit premier cadre et est sensiblement orthogonal audit premier axe,
- un rotor (16) qui est monté de sorte à tourner autour d'un troisième axe de rotation (15') entraîné par ledit second cadre et sensiblement orthogonal audit deuxième axe ;
ladite structure ayant des moyens de génération électrique, comprenant au moins un premier aimant (14) et un premier enroulement (11) associé opérationnellement audit premier aimant, et au moins un second aimant (10) et un second enroulement (17) associé opérationnellement associés audit second aimant,
de telle sorte que
l'un entre ledit premier aimant et ledit premier enroulement est entraîné par ledit second cadre à tourner autour dudit deuxième axe, tandis que l'autre entre ledit premier aimant et ledit premier enroulement est entraîné par ledit premier cadre, de telle sorte que ledit premier aimant et ledit premier enroulement sont mobiles l'un par rapport à l'autre autour dudit rotor dans un premier plan croisant le rotor, et
l'un entre ledit second aimant et ledit second enroulement est entraîné par ledit premier cadre à tourner autour dudit premier axe, tandis que l'autre entre ledit second aimant et ledit second enroulement est fixe par rapport auxdits premier et second cadres, de telle sorte que ledit second aimant et ledit second enroulement sont mobiles l'un par rapport à l'autre autour dudit rotor dans un second plan croisant le rotor.

2. Structure selon la revendication 1, dans laquelle ledit premier plan contient ledit premier axe (7') et ledit second plan contient ledit deuxième axe (9').

3. Structure selon la revendication 2, dans laquelle une pluralité dudit premier aimant (14) et dudit premier enroulement (11) sont disposés, associés opérationnellement l'un à l'autre, sensiblement le long de premières trajectoires circulaires respectives contenues dans ledit premier plan et dont l'axe coïncide avec ledit deuxième axe, et une pluralité dudit second aimant (10) et dudit second enroulement (17) sont disposés, associés opérationnellement l'un à l'autre, le long de secondes trajectoires circulaires respectives contenues dans ledit second plan et dont l'axe coïncide avec ledit premier axe.

4. Structure selon la revendication 1, dans laquelle ledit premier cadre comprend un premier anneau (7a) qui est conçu pour entraîner une série circulaire de l'un entre ledit premier aimant et le premier enroulement, qui est disposé avec son propre axe aligné sur ledit deuxième axe (9'), de telle sorte que ladite série coopère avec une série correspondante de l'autre entre ledit premier aimant et ledit premier enroulement, que ledit second cadre (12) est conçu pour entraîner, dans laquelle ledit premier cadre possède en outre un second anneau (7b) qui est fixé audit premier anneau (7a) avec son propre axe aligné sur ledit premier axe (7'), ledit second anneau entraînant ledit deuxième axe (9') et étant conçu pour recevoir une série de l'un entre ledit second aimant et un second enroulement, qui est conçu pour coopérer avec une série circulaire correspondante de l'autre entre ledit second aimant et ledit second enroulement, qui est fixe par rapport audits premier et second cadres.

5. Structure selon la revendication 4, dans laquelle ledit second cadre a une configuration d'anneaux qui se croisent, dont les axes sont orthogonaux les uns par rapport aux autres et se croisent en un point définissant un centre commun desdits anneaux, ledit second cadre (12) entraînant ledit troisième axe (15') selon un agencement dans lequel ledit troisième axe coïncide sensiblement avec la direction identifiée par le croisement des plans définis par les anneaux se croisant, l'un entre lesdits anneaux se croisant étant conçu pour entraîner ladite série correspondante de l'autre entre ledit premier aimant et ledit premier enroulement, tandis que l'autre entre lesdits anneaux se met en prise avec ledit second anneau (7b) afin de pouvoir tourner par rapport à lui, autour dudit deuxième axe (9').

6. Structure selon la revendication 1, dans laquelle ledit premier cadre a une configuration d'anneaux qui se croisent (7a, 7b), avec des axes orthogonaux l'un par rapport à l'autre et se croisant en un point définissant un centre commun desdits anneaux, définissant une première et une seconde trajectoires circonférentielles, respectivement à l'intérieur desdits premier et second plans, le long desquelles une série de l'un dudit premier aimant et dudit premier enroulement et une série de l'un dudit second aimant et dudit second enroulement peuvent être respectivement disposées.

7. Système pour générer de l'énergie électrique à partir d'un mouvement ondulatoire de la mer comprenant un corps flottant et une structure gyroscopique (6) selon l'une quelconque des revendications 1 à 6 placée sur ledit corps flottant.
